(19) Europäisches Patentamt

European Patent Office

Office européen des brevets

(11) **EP 0 734 778 B1**

(12) **EUROPÄISCHE PATENTSCHRIFT**

(45) Veröffentlichungstag und Bekanntmachung des Hinweises auf die Patenterteilung:
**15.09.1999 Patentblatt 1999/37**

(51) Int. Cl.$^6$: **B05B 5/10**, B05B 5/053,
H02M 3/335, H02M 7/10,
H02H 7/00

(21) Anmeldenummer: **96100941.2**

(22) Anmeldetag: **24.01.1996**

(54) **Elektrostatische Sprühbeschichtungseinrichtung**

Electrostatic spray coating device

Dispositif de revêtement par pulvérisation électrostatique

(84) Benannte Vertragsstaaten:
**BE CH DE ES FR GB IT LI**

(30) Priorität: **27.03.1995 DE 19511255**

(43) Veröffentlichungstag der Anmeldung:
**02.10.1996 Patentblatt 1996/40**

(73) Patentinhaber: **ITW Gema AG**
**9015 St. Gallen (CH)**

(72) Erfinder: **Mauchle, Felix**
**CH-9030 Abtwil (CH)**

(74) Vertreter:
**Vetter, Ewald Otto, Dipl.-Ing.**
**Meissner, Bolte & Partner**
**Anwaltssozietät**
**Postfach 10 26 05**
**86016 Augsburg (DE)**

(56) Entgegenhaltungen:
**FR-A- 2 704 699**

## Beschreibung

Die Erfindung betrifft eine elektrostatische Sprühbeschichtungseinrichtung, insbesondere für Beschichtungspulver, gemäß den Patentansprüchen.

Aus der deutschen Patentschrift DE 34 02 945 C2 ist eine elektrostatische Sprühpistole zum Sprühbeschichten von Gegenständen mit Beschichtungspulver oder Beschichtungsflüssigkeit bekannt, welche eine Lampe enthält, die jeweils dann aufleuchtet, wenn eine bestimmte elektrische Spannung für Hochspannungselektroden vorhanden ist. Eine Messung der Spannung zur Anzeige der jeweiligen Spannungsgröße erfolgt nicht. Die Sprühpistole enthält einen Hochspannungserzeuger, welcher aus einem Transformator und einer Spannungsvervielfacherschaltung gemäß "Greinacher", einer sogenannten Kaskadenschaltung, besteht und die Hochspannung für die Elektroden erzeugt. Die Sekundärseite des Transformators ist an die Spannungsvervielfacherschaltung angeschlossen, die Primärseite des Transformators erhält von einer nicht dargestellten Wechselspannungswelle über ein Kabel eine Niederspannungs-Wechselspannung. Die Niederspannungs-Wechselspannung wird in der Praxis meistens durch einen Oszillator erzeugt. Der Oszillator kann in der Pistole oder extern von der Pistole angeordnet sein. Hochspannungserzeuger dieser Art sind auch aus den US-A 3 731 145, 3 764 883 und 4 196 465 (= DE-PS 28 51 066) bekannt.

Zur Aufrechterhaltung einer gleichbleibend hohen Gleichspannungs-Wechselspannung an der Hochspannungselektrode oder den Hochspannungselektroden wäre es mit zunehmender Stromstärke erforderlich, die Eingangsspannung des Hochspannungserzeugers zu erhöhen. Die Leistung oder Energie des Hochspannungserzeugers entspricht dem mathematischen Produkt aus Spannung mal Strom. Wenn die elektrische Leistung oder Energie eine bestimmte Höhe überschreitet, besteht die Gefahr von elektrischen Überschlägen auf den zu beschichtenden Gegenstand oder Anlagenteile oder Personen. Aus diesem Grunde ist es bekannt, den Hochspannungserzeuger mit einer Leistungsbegrenzungsschaltung zu versehen, welche ab einer bestimmten Leistung oder Energie bei weiter zunehmender Stromstärke die Spannung entsprechend reduziert und dadurch die Leistung oder Energie begrenzt. Zur Ermittlung der Energie müssen der Strom und die Spannung der Hochspannungselektrode ermittelt werden. Die Hochspannung zwischen Hochspannungselektrode und Erdpotential kann nur im Leerlauf gemessen werden, wenn die Hochspannung eingeschaltet ist, jedoch kein Beschichtungsmaterial versprüht wird, weil sonst das Beschichtungsmaterial die Meßvorrichtung verschmutzen und das Sprühbild des zu beschichtenden Gegenstandes durch die Meßvorrichtung gestört würde. Deshalb ist es üblich, die Eingangsspannung des Hochspannungserzeugers zu messen und mit dem Spannungsvervielfachungsfaktor zu multiplizieren, um die theoretische Hochspannung der Hochspannungselektroden festzustellen. Zur Messung des Elektrodenstromes wird in der europäischen Patentanmeldung Nr. 93 810 109.4, Veröffentlichungs-Nr. 0 559 608 A2, vorgeschlagen, den von dem zu beschichtenden Werkstück zur Erde fließenden Strom zu messen. Dieser Strom entspricht dem Strom, welcher von der Hochspannungselektrode durch den Luftzwischenraum zu dem zu beschichtenden Werkstück und dann von diesem zur Erde fließt. Diese Art der Messung des elektrischen Stromes ist jedoch umständlich und sehr fehlerhaft, da der Stromwert sehr klein ist.

Ferner wird bei allen bekannten Sprüheinrichtungen nicht berücksichtigt, daß bei Messung der Eingangsspannung des Hochspannungserzeugers und seiner Multiplikation mit dem Spannungsvervielfacherfaktor nur der theoretische Wert der Elektrodenhochspannung bei Leerlauf ermittelt wird, und daß aber dieser errechnete Wert während des Sprühbetriebes falsch ist. Während des Sprühbetriebes fließt im Hochspannungserzeuger ein elektrischer Strom, so daß im Hochspannungserzeuger ein Spannungsabfall stattfindet, um dessen Wert die errechnete theoretische Elektrodenhochspannung niedriger ist als die tatsächliche Elektrodenhochspannung.

Durch die Erfindung soll die Aufgabe gelöst werden, auf einfache Weise jederzeit im Leerlauf und auch während des Sprühbetriebes den tatsächlichen Istwert der Hochspannung an der Hochspannungselektrode oder an den Hochspannungselektroden zu messen, damit mit dem tatsächlichen Istwert der Elektrodenhochspannung entweder von einer Bedienungsperson oder automatisch die Leistungsgrenze oder Energiegrenze der Sprüheinrichtung eingehalten werden kann und reproduzierbare Hochspannungswerte der Elektrode oder Elektroden für verschiedene Beschichtungsmaterialien und verschiedene Beschichtungsarten oder Beschichtungsdicken erzeugt werden können.

Durch Untersuchungen im Rahmen der Erfindung wurde festgestellt, daß bei den bekannten Methoden, bei welchen die Eingangsspannung des Hochspannungserzeugers gemessen und mit einem Spannungsvervielfachungsfaktor multipliziert wird, die daraus errechnete Hochspannung an den Elektroden um bis zu 30 % falsch ist.

Die Aufgabe wird gemäß der Erfindung durch die unabhängigen Patentansprüche gelöst.

Weitere Ausführungen der Erfindung sind in den Unteransprüchen enthalten.

Die Erfindung hat den Vorteil, daß nicht nur im Leerlauf bei eingeschalteter elektrischer Anlage, sondern auch während des Sprühbetriebes auf einfache Weise der jeweils tatsächliche Istwert der Elektrodenhochspannung festgestellt wird. Die Erfindung ermöglicht es auf einfache Weise Leistungsgrenzwerte oder Energiegrenzwerte zum Schutz gegen elektrische Überschläge exakt festzustellen und einzuhalten. Ein weiterer wesentlicher Vorteil der Erfindung ist, daß sie auch bei bereits bestehenden Sprüheinrichtungen auf einfache Weise verwendet werden kann, ohne daß die Sprüheinrichtung oder Sprühpistole geöffnet oder zerstört werden muß. Bei den bekannten Sprühpistolen sind die Hochspannungserzeuger häufig in ein Pistolengehäuse eingegossen oder in passenden Kammern untergebracht, in welchen weitere Schaltungsteile keinen Platz haben.

Die Erfindung wird im folgenden mit Bezug auf die beiliegenden Zeichnungen anhand von bevorzugten Ausführungsformen als Beispiele beschrieben. In den Zeichnungen zeigen

Fig. 1     ein Ersatzschaltbild für einen Hochspannungserzeuger einer elektrostatischen Sprühbeschichtungseinrichtung gemäß der Erfindung,

Fig. 2     schematisch eine elektrostatische Sprühbeschichtungseinrichtung nach der Erfindung mit einem Hochspannungserzeuger und einer elektronischen Kompensation des Spannungsabfalls im Hochspannungserzeuger, insbesondere in einem Transformator und einer Spannungsvervielfacherschaltung des Hochspannungserzeugers, wobei diese Kompensation im folgenden Ri-Kompensation genannt wird,

Fig. 3     eine schematische Darstellung einer elektrostatischen Sprühbeschichtungseinrichtung mit einer elektronischen Steuerschaltung zur Ri-Kompensation,

Fig. 4     eine schematische Darstellung einer elektrostatischen Sprühbeschichtungseinrichtung mit einer elektronischen Steuerschaltung zur Ri-Kompensation und zur Regelung der Elektrodenhochspannung,

Fig. 5     die elektrostatische Sprühbeschichtungseinrichtung von Fig. 4 als Blockschaltbild mit mehr Details.

Die im folgenden beschriebene elektronische Steuerschaltung nach der Erfindung ermöglicht auf einfache Weise im Leerlauf bei eingeschalteter Hochspannung und auch während des Sprühbetriebes mit eingeschalteter Hochspannung die automatische Messung des jeweils tatsächlichen Ist-Wertes der Gleichspannungs-Hochspannung der Hochspannungselektrode (oder bei Verwendung von mehreren Hochspannungselektroden die Hochspannung dieser Hochspannungselektroden), unabhängig davon, ob sich der Abstand zwischen der Hochspannungselektrode und dem zu beschichtenden Gegenstand verändert, unabhängig von einem sich verändernden elektrischen Widerstand zwischen dem zu beschichtenden Objekt und Erdpotential und unabhängig von einem sich verändernden elektrischen Widerstand des Beschichtungsmaterials auf dem zu beschichtenden Gegenstand bei sich ändernder Schichtdicke oder sich ändernden Eigenschaften des Beschichtungsmaterials.

1. Hochspannungserzeuger

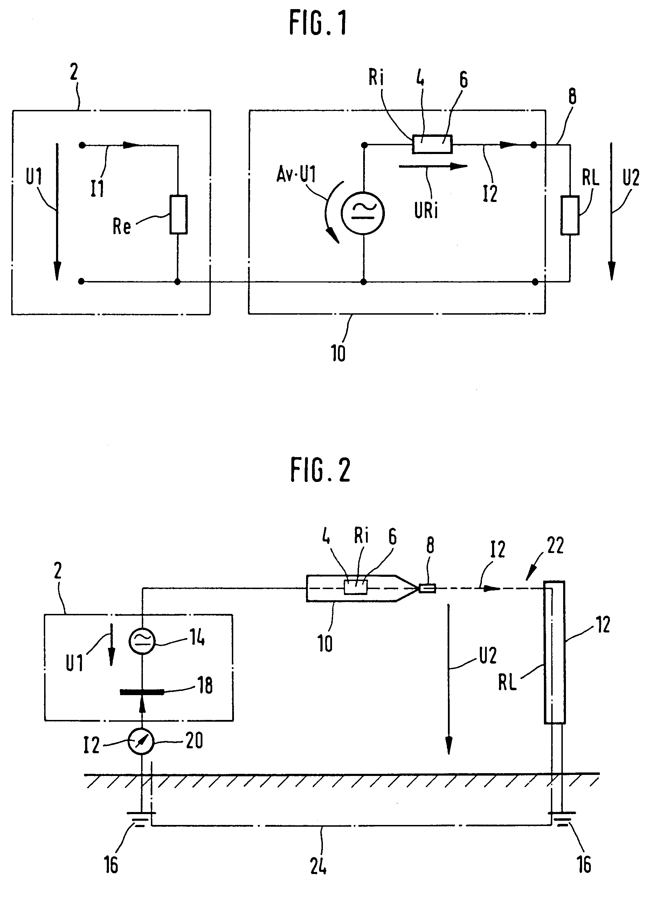

Gemäß Fig. 1 kann ein Hochspannungserzeuger als steuerbare Spannungsquelle angesehen werden, bestehend aus einem Oszillator 2, einem Transformator 4 und einer Spannungsvervielfacherschaltung 6 zur Erzeugung der benötigten Gleichspannungs-Hochspannung an der mindestens einen Hochspannungselektrode 8 einer Sprühvorrichtung 10. Die Sprühvorrichtung 10 kann eine Handpistole oder automatische Pistole sein, welche von einer Maschine getragen wird, oder ein sogenannter Rotationszerstäuber oder irgendeine andere Form.

Wenn wir den Hochspannungserzeuger gemäß Fig. 1 als spannungsgesteuerte Spannungsquelle betrachten, dann ist die Eingangsspannung eine Wechselspannung und die Ausgangsspannung eine Gleichspannung, welche durch die Spannungsvervielfacherschaltung 6 entsteht. In dem Ersatzschaltbild von Fig. 1 für den Hochspannungserzeuger bedeuten:

$U1$:     Eingangsspannung oder Steuerspannung des Oszillator 2

$U2$:     Hochspannung zwischen der Elektrode 8 und Erdpotential

$Av$:     Faktor, um welchen der Transformator 4 und die Spannungsvervielfacherschaltung 6 die Nieder-Wechselspannung des Oszillator 2 erhöhen (multiplizieren)

$Ri$:     Elektrischer Innenwiderstand der Sprühvorrichtung 10, gemessen auf der Ausgangsseite der Spannungsvervielfacherschaltung zwischen Hochspannungselektrode 8 und Erdpotential

$I2$:     Ausgangsstrom des Hochspannungserzeugers (Elektrostrom oder Erdstrom von der Hochspannungselektrode 8 zu Erdpotential)

$RL$:     Lastwiderstand (elektrischer Widerstand des Luftzwischenraumes zwischen Hochspannungselektrode 8 und einem zu beschichtenden Gegenstand, elektrischer Widerstand des zu beschichtenden Gegenstandes und der auf ihn aufgetragenen wachsenden Beschichtung, elektrischer Widerstand von dem zu beschichtenden Gegenstand bis zu Erdpotential)

$I1$:     Elektrischer Strom im Oszillator 2

Re:     Innenwiderstand des Oszillator 2

Die Gleichung für die Spannungsübertragung lautet

$$U2 = Av \times U1 - Ri \times I2 \qquad \text{Gleichung 1}$$

Aus der Gleichung 1 ist ersichtlich, daß am Innenwiderstand Ri der spannungsgesteuerten Spannungsquelle je nach Größe von I2 eine Spannung URi abfällt.

2. Messung der Gleichspannungs-Hochspannung der Hochspannungselektrode.

2.1. Konventionelle Methode

Um die tatsächliche Hochspannung an der Hochspannungselektrode 8 zu messen, müßte die Spannung U2 von Fig. 1 gemessen werden. Diese Messung kann während des Sprühbetriebes nicht von außen an der Hochspannungselektrode 8 gemacht werden. Zur Messung der Spannung U2 der Hochspannungselektrode 8 innerhalb der Sprühvorrichtung 10 müßte in ihr ein elektrischer Widerstand untergebracht und ein Bezugspotential gebildet werden, damit der Spannungsabfall über dem internen elektrischen Widerstand gemessen werden könnte. Die Unterbringung eines solchen zusätzlichen internen Widerstandes zur Spannungsmessung würde folgende Nachteile haben: Zusätzliches Gewicht der Sprühvorrichtung oder Sprühpistole 10, zusätzlicher Platzbedarf für den internen Widerstand in der Sprühvorrichtung 10, Zusatzkosten für den internen Widerstand, bei bereits bestehenden Sprühvorrichtungen oder Pistolen kann ein solcher interner Widerstand nicht nachträglich integriert werden und damit auch nicht zur genauen Messung und/oder Regelung der Elektroden-Hochspannung verwendet werden.

2.2. Ri-Kompensation

Eine wesentlich einfachere Methode als die genannte konventionelle Methode mittels eines internen Meßwiderstandes ist gemäß der Erfindung die nachfolgend beschriebene Ri-Kompensation. Bei der Ri-Kompensation wird entsprechend der Gleichung 1 die tatsächliche Elektrodenhochspannung U2 berechnet, ohne daß ein realer Meßwiderstand in der Sprühvorrichtung 10 benötigt wird. Für die Berechnung der Elektrodenhochspannung U2 benötigen wir die Werte Av, U1, Ri und I2. Der Faktor Av ist durch das Windungsverhältnis (Primärseite zu Sekundärseite) des Transformators 4 und durch die Anzahl der Kaskadenstufen in der Spannungsvervielfacherschaltung 6 gegeben. Der Innenwiderstand Ri der Sprühvorrichtung 10 kann für jede Sprühvorrichtung 10 vorab mit den bekannten Meßmethoden gemessen und damit bestimmt werden. Die Messung erfolgt quasi von rückwärts in die Sprühvorrichtung 10 hinein durch Anschließen eines Widerstandsmeßgerätes zwischen die Hochspannungselektrode 8 und Erdpotential. Der Ausgangsstrom (Erdstrom) I2 und die Eingangsspannung oder Steuerspannung U1 können laufend durch Meßgeräte gemessen werden. Anstelle des Ersatzschaltbildes von Fig. 1 können zur Veranschaulichung der Ri-Kompensation entsprechend Fig. 2 die realen Komponenten dargestellt werden. Fig. 2 zeigt einen zu beschichtenden Gegenstand 12, schematisch eine Hochspannungsquelle 14, Erdpotential 16, ein von Erdpotential 16 verschiedenes elektrisches Bezugspotential 18 und ein elektrisches Strommeßgerät 20 zur Messung des Ausgangsstromes I2, welcher von der Hochspannungselektrode 8 über einen Luftzwischenraum 22 zu dem zu beschichtenden Gegenstand 12, dann über eine ihn tragende, nicht dargestellte Transport- oder Haltevorrichtung zu Erdpotential 16, und dann von Erdpotential durch das Strommeßgerät 20 zu dem Bezugspotential 18 fließt. Dieser Ausgangsstrom oder Erdstrom ist in Fig. 2 und den Fig. 3, 4 und 5 in einer aus zwei Punkten und einem Strich gebildeten Linie schematisch dargestellt. Das Symbol 14 stellt symbolisch die Hochspannungsquelle dar, enthaltend den Oszillator, den Transformator 4 und die Spannungsvervielfacherschaltung 6. Der zu beschichtende Gegenstand 12 mit der darauf gebildeten Beschichtung und die Luft im Luftzwischenraum 22, der sich zwischen der Hochspannungselektrode 8 und 10 dem zu beschichtenden Gegenstand 12 befindet, bildet den elektrischen Lastwiderstand RL. Der Vorrichtungsinnenwiderstand oder Pistoleninnenwiderstand Ri ist jener Widerstand, der zwischen der Hochspannungselektrode 8 und einem zweiten Bezugspotential, normalerweise Erdpotential 16, rückwärts in die Sprühvorrichtung 10 hineingemessen werden kann. Die Hochspannungsquelle 14 stellt die Eingangsspannung oder Steuerspannung U1 aus dem Ersatzschaltbild von Fig. 1 dar.

3. Hochspannungsmessung mit Ri-Kompensation

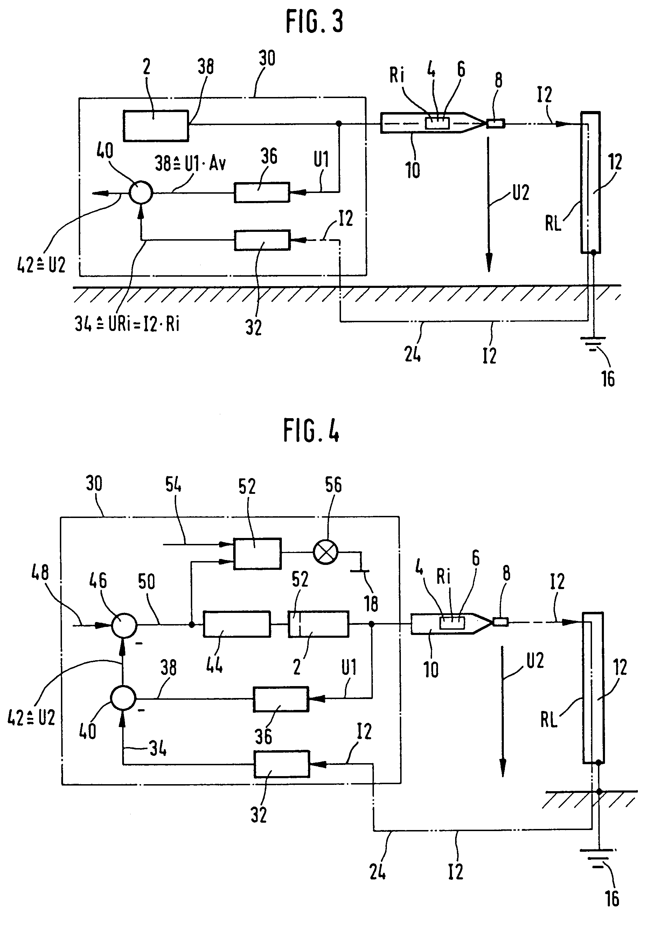

Im folgenden wird mit Bezug auf das Blockschaltbild von Fig. 3 die Hochspannungsmessung mit der Ri-Kompensation erläutert. In einer elektronischen Steuerschaltung 30 wird von einem Ausgangsspannungsmeßteil 32 der Ausgangsstrom (Erdstrom) I2 gemessen und elektronisch mit dem Innenwiderstand Ri der Sprühvorrichtung 10 multipliziert, wobei das Multiplikationsprodukt dem Spannungsabfall URi über dem Vorrichtungsinnenwiderstand Ri entspricht. Der Ausgangsspannungsteil 32 erzeugt aus diesem Multiplikationsprodukt ein Spannungsabfall-Spannungssignal 34, welches dem internen Spannungabfall $URi = I2 \times Ri$ entspricht. Die Eingangsspannung oder Steuerspannung U1 wird von einem Eingangsspannungsmeßteil 36 am Ausgang 38 des Oszillator 2 gemessen und mit dem Spannungsvervielfachungsfaktor Av multipliziert, wobei das daraus gebildete Multiplikationsprodukt der Spannung U1 x Av entspricht. Das Eingangsspannungsmeßteil 36 erzeugt entsprechend diesem Multiplikatinsprodukt eine Eingangsspannungs-Signalspannung 38. In einer Istwert-Differenzschaltung 40 wird von der Eingangsspannungs-Signalspannung 38 das Spannungsabfall-Spannungssignal 34 subtrahiert und daraus eine Differenz-Signalspannung 42 erzeugt, welche für jede Betriebssituation, mit und ohne Sprühbetrieb dem jeweiligen Hochspannungs-Istwert der Hochspannungselektrode 8 entspricht.

Diese Art der Hochspannungsmessung mit Ri-Kompensation weist folgende Vorteile auf: Es wird kein Meßwiderstand in der Sprühvorrichtung 10 benötigt; bestehende Sprühvorrichtungen 10 oder Pistolen, in welche kein Meßwiderstand integriert werden kann, können trotzdem gemäß der Erfindung so verbessert werden, daß eine genaue Hochspannungsmessung und Hochspannungsregelung möglich ist, da die Ri-Kompensation keinen Meßwiderstand in der Sprühvorrichtung benötigt; preiswert und funktionssicher.

4. Hochspannungsregelung mir Ri-Kompensation

Um eine gewählte Elektrodenhochspannung auf dem gewünschten Wert zu halten, wird gemäß der Erfindung die Elektrodenhochspannung mit der vorstehend beschriebenen Ri-Kompensationsschaltung gemessen und einem Regler 44 zur Regelung der Elektrodenhochspannung gemäß Fig. 4 zugeführt.

Die Hochspannungsregelung ist im Blockschaltbild von Fig. 4 dargestellt. Der Hochspannungs-Istwert 42, welcher der Elektrodenhochspannung U2 entspricht, wird in der vorstehend mit Bezug auf Fig. 3 beschriebenen Weise gemessen und durch eine Sollwert-Differenzschaltung 46 von einem Hochspannungs-Sollwert 48 subtrahiert und daraus eine Regeldifferenzspannung 50 gebildet. Die Regeldifferenzspannung 50 wird als Stellgröße dem Eingang des Reglers 44 zugeführt. Der Regler 44 erzeugt in Abhängigkeit von der Regeldifferenzspannung 50 die benötigte Steuerspannung für den Oszillator 44, um an der Hochspannungselektrode 8 den gewünschten Hochspannungs-Sollwert U2 zu erreichen.

5. Leistungsbegrenzungsanzeige

Ein Hochspannungserzeuger, bestehend aus Oszillator 2, Transformator 4 und Spannungsvervielfacherschaltung 6, darf entsprechend verschiedenen Sicherheitsvorschriften eine bestimmte Leistungsgrenze (Energiegrenze) aus Gründen des Personenschutzes und der Staubexplosionsgefährdung nicht überschreiten. Für die Gewährleistung dieser Vorschriften werden Leistungsbegrenzungsschaltungen eingesetzt, wie sie allgemein bekannt sind. Leistungsbegrenzungsschaltungen sind so ausgelegt, daß die Elektrodenhochspannung bei ansteigendem Elektrodenstrom entsprechend diesem ansteigenden Elektrodenstrom solange reduziert wird, bis die vorgeschriebene Energiegrenze eingehalten wird. Dies bedeutet, daß die Energie oder Leistung der Sprühvorrichtung entsprechend einer Spannungs-Strom-Kennlinie betrieben wird. Nicht bekannt ist jedoch eine Schaltung, die je nach Arbeitspunkt, welcher sich durch den Elektrodenstrom I2 und den Lastwiderstand RL ergibt, das Erreichen und Eintreten in den Energie-Begrenzungsbereich detektiert und optisch, akustisch oder auf andere Weise anzeigt. Durch die Erfindung wird eine einfache und betriebssichere Schaltung vorgeschlagen, welche es ermöglicht, für jede Detektion eines Leistungsbegrenzungs-Eintritts die maximal mögliche Elektrodenhochspannung zu ermitteln, die zu keiner Leistungsbegrenzung führt. Dies hat den Vorteil, daß die Elektrodenhochspannung als reproduzierbarer Parameter bei der Beurteilung des Beschichtungsresultats verwendet werden kann.

In Fig. 4 ist die Leistungsbegrenzungsschaltung 52 schematisch als Schaltungsteil der elektronischen Steuerschaltung 30 dargestellt. Aus dem Blockschaltbild des Hochspannungsreglers von Fig. 4 ist ersichtlich, daß die Regeldifferenzspannung 50 eine Subtraktion des Elektrodenhochspannungs-Istwertes 42 vom Elektrodenhochspannungs-Sollwert 48 ist oder eine dieser Differenz entsprechende Signalspannung ist. Die Leistungsbegrenzungsschaltung 52 befindet sich im Oszillator 2. Wenn der Elektrodenstrom I2 auf ein Maß ansteigt, wo die Leistungsbegrenzung einsetzt, dann bewirkt die Leistungsbegrenzungsschaltung 52, daß die Hochspannung U2 der Hochspannungselektrode 8 bei weiter ansteigendem Elektrodenstrom oder Ausgangsstrom (Erdstrom) I2 in Abhängigkeit von diesem Stromanstieg derart reduziert wird, daß die Leistung auf den zulässigen Leistungswert oder Energiegrenzwert reduziert wird. Da mit der Erfindung der Elektrodenhochspannungs-Istwert 42 gemessen wird, wird auch automatisch die Hochspannungsreduktion detektiert. Wenn die Leistungsbegrenzungsschaltung auf diese Weise wirksam wird, wird die Elektrodenhochspannung an der Hochspannungselektrode 8 automatisch unter den Hochspannungs-Sollwert 48 gedrückt. Damit wird die Regeldifferenz, welche der Regeldifferenzspannung 50 entspricht, positiv. Der Regler 44 versucht deshalb jetzt vergeblich die Hochspannung zu erhöhen, da die Leistungsbegrenzungsschaltung 52 eine Spannungserhöhung verhindert. Die Regeldifferenz 50 bleibt somit immer positiv. Diese Wirkung wird von der Erfindung ausgenutzt. Gemäß der Erfindung wird die Regeldifferenz-Signalspannung 50 nicht nur dem Regler 44, sondern auch einer elektronischen Vergleichsschaltung 52 zugeführt. Die Vergleichsschaltung 52 vergleicht die Regeldifferenz-Signalspannung 50 mit einer vorgegebenen Vergleichsspannung 54. Wenn die Regeldifferenz-Signalspannung größer ist als die Vergleichsspannung 54, dann aktiviert die Vergleichsschaltung 52 ein Anzeigeelement 56 und zeigt dadurch an, daß der Hochspannungserzeuger im Bereich der Leistungsbegrenzung arbeitet. Das Anzeigeelement 56 ist vorzugsweise eine Lampe oder Leuchtdiode, könnte jedoch auch ein akustisches oder optisches Anzeigeelement sein. Sein Referenzpotential kann das Referenzpotential 18 oder Erdpotential 16 sein. Die Vergleichsschaltung 52 braucht also immer nur dann automatisch aktiviert oder eingeschaltet zu werden, wenn die Leistungsgrenze oder Energiegrenze erreicht oder überschritten wird.

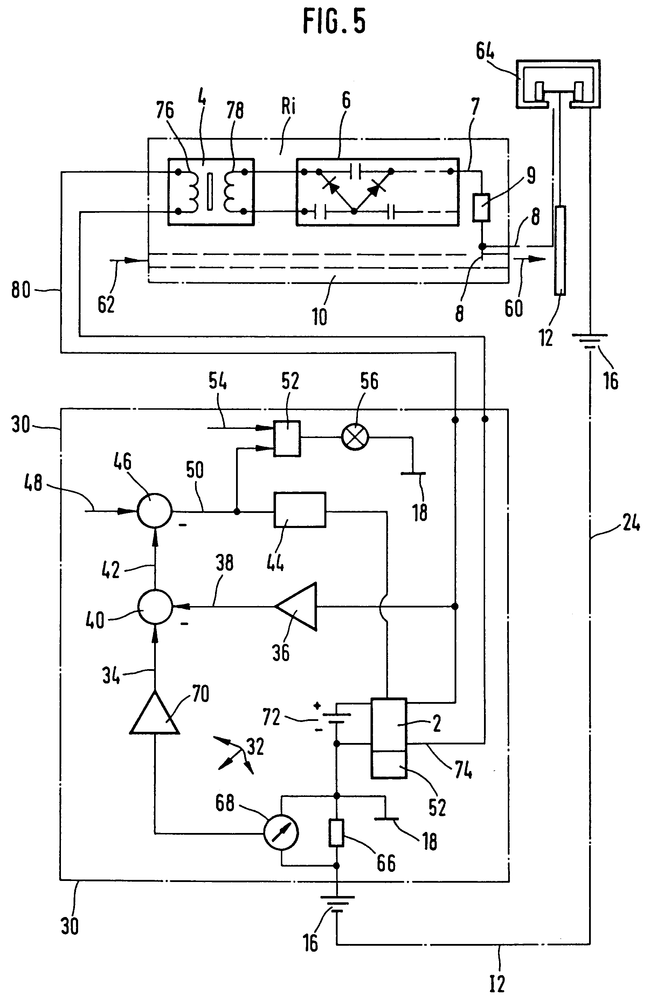

Fig. 5 zeigt die elektronische Sprühbeschichtungseinrichtung von Fig. 4 mehr im Detail und angewendet zum Sprühbeschichten von Gegenständen 12 mit Beschichtungspulver 60. Das Beschichtungspulver 60 wird der Sprühvorrichtung 10 an einem Vorrichtungsende mittels einer Leitung 62 zugeführt und am anderen Vorrichtungsende auf den zu beschichtenden Gegenstand 12 gesprüht. Ein Träger 64 für den zu beschichtenden Gegenstand 12 ist beispielsweise eine Transportvorrichtung, beispielsweise ein Hängeförderer, welcher nach und nach Gegenstände 12 an der Sprühvorrichtung 10 vorbeitransportiert. Die Tragvorrichtung 64 ist geerdet bei 16. In der Sprühvorrichtung 10 befinden sich der Transformator 4 und die Spannungsvervielfacherschaltung 6, welches vorzugsweise eine Kaskadenschaltung ist, die aus einer Vielzahl von Kondensatoren und Gleichrichtern gebildet ist. In der elektrischen Verbindung 7 zwischen dem Hochspannungsausgang der Spannungsvervielfacherschaltung 6 und der Hochspannungselektrode 8 kann sich ein elektrischer Widerstand 9 zur Strombegrenzung befinden. Dieser gehört dann zum Innenwiderstand Ri der Sprühvorrichtung 10, da er beim Messen dieses Innenwiderstandes Ri zwischen der Hochspannungselektrode 8 und Erdpotential 16 automatisch mit gemessen wird. Anstelle einer Hochspannungselektrode 8 können auch mehrere Hochspannungselektroden 8 vorhanden sein, beispielsweise sind in Fig. 5 zwei Hochspannungselektroden 8 dargestellt. Gemäß Fig. 5 kann der Eingangsspannungsmeßteil 36 eine Verstärkerschaltung sein. Der Ausgangsspannungsmeßteil 32 kann gemäß Fig. 5 einen zwischen Erdpotential 16 und das Bezugspotential 18 geschalteten elektrischen Widerstand 66, ein den Spannungsabfall über diesem Meßwiderstand 66 messendes elektrisches Spannungsmeßelement 68 und eine die gemessene Spannung verstärkende Verstärkerschaltung 70 enthalten, an dessen Ausgang die Differenz-Signalspannung 34 erzeugt wird, die dem Spannungsabfall über dem Innenwiderstand Ri der Sprühvorrichtung 10 entspricht. Der Oszillator 2 ist auf seiner Eingangsseite an eine Niederspannungs-Gleichspannungsquelle 72 angeschlossen und erzeugt auf ihrer Ausgangsseite 74 eine Niederspannungs-Wechselspannung für die Primärwicklung 76 des Transformators 4. An der Sekundärwicklung 78 des Transformators 4 entsteht eine wesentlich höhere Wechselspannung, welche von der Spannungsvervielfacherschaltung 6 in eine nochmals wesentlich höhere Gleichspannung-Hochspannung für die Elektrode 8 umgewandelt wird. Die Elektrodenhochspannung liegt vorzugsweise im Bereich zwischen 4 kV und 140 Kv. In allen Fig. sind gleiche Teile mit gleichen Bezugszahlen versehen, weshalb die übrigen Teile von Fig. 5, welche mit den Teilen der anderen Fig. übereinstimmen, nicht extra beschrieben werden, jedoch mit den gleichen Bezugszahlen versehen sind.

Gemäß den dargestellten Ausführungsformen befinden sich vom Hochspannungserzeuger 2, 4, 6 der Oszillator 2 in der elektronischen Steuerschaltung 30 separat von der Sprühvorrichtung 10 in einem Steuergerät oder Schaltschrank. Der Oszillator 2 ist über elektrische Leitungen 80 an die Primärwicklung 76 des Transformators 4 angeschlossen. Der Transformator 4 und die Spannungsvervielfacher-schaltung 6 befinden sich in der Sprühvorrichtung oder Pistole 10. Der Oszillator 2 bildet mit dem Transformator 4 einen Oszillator-Schwingkreis. Gemäß einer abgewandelten Ausführungsform könnte jedoch auch ein selbstschwingender Oszillator 2 verwendet werden. Gemäß einer ebenfalls abgewandelten Ausführungsform kann der Transformator 4 und/oder die Spannungsvervielfacherschaltung 6 in die elektronische Steuerschaltung 30 integriert und in einem Schaltschrank oder einem Steuergerät extern von der Sprühvorrichtung 10 untergebracht werden. In anderer Ausführungsform ist es möglich, den Oszillator 2 zusätzlich zum Transformator 4 und der Spannungsvervielfacherschaltung 6 in der Sprühvorrichtung 10 unterzubringen. Gemäß einer nochmals weiter abgewandelten Ausführungsform wäre es auch möglich, weitere Teile oder alle Teile der elektronischen Steuerschaltung 30 in der Sprühvorrichtung 10 unterzubringen, zusätzlich zu dem Transformator 4 und der Spannungsvervielfacherschaltung 6.

Im folgenden werden vorzugsweise Betriebswerte angegeben. Der Transformator 4 hat auf seiner an den Oszillator 2 angeschlossenen Primärseite eine einstellbare Effektivspannung im Bereich zwischen Null und 60 Volt, auf seiner Sekundärseite eine einstellbare Effektivspannung im Bereich zwischen Null und 20 Kilovolt, und eine Frequenz im Bereich zwischen 4 Kilovolt und 140 Kilovolt. Die Gleichspannungs-Hochspannung an der Elektrode 8 liegt vorzugsweise im Bereich zwischen 10 Kilovolt und 150 Kilovolt und ist vorzugsweise ebenfalls einstellbar. Die Niederspannungs-Gleichspannungsquelle 72 erzeugt für die Eingangsseite des Oszillators 2 eine einstellbare Gleichspannung im Bereich zwischen Null Volt und 90 Volt.

**Patentansprüche**

1. Elektrostatische Sprühbeschichtungseinrichtung, insbesondere für Beschichtungspulver, enthaltend

   mindestens eine Sprühvorrichtung (10) zum Sprühen des Beschichtungsmaterials auf einen zu beschichtenden Gegenstand (12), welcher mit Erdpotential (16) elektrisch verbunden ist;

mindestens eine von der Sprühvorrichtung (10) getragene Hochspannungselektrode (8) zum elektrostatischen Aufladen des Beschichtungsmaterials;

einen Hochspannungserzeuger (2, 4, 6), welcher eine Spannungstransformationsschaltung (4, 6) aufweist und die Hochspannung für die Hochspannungselektrode (8) erzeugt, **dadurch gekennzeichnet,** daß eine elektrische Steuerschaltung (30) vorgesehen ist, welche mindestens folgende drei Schaltungsteile (36, 32, 40) aufweist:

ein Eingangsspannungs-Meßteil (36), welches eine Eingangsspannung (U1) oder Steuerspannung der Spannungstransformationsschaltung (4, 6) misst und damit eine Eingangs-Signalspannung (38) erzeugt, welche dem Multiplikationsprodukt aus der gemessenen Steuerspannung oder Eingangsspannung (U1) mal einem Spannungsvervielfachungsfaktor (Av) entspricht, wobei der Spannungsvervielfachungsfaktor (Av) die Spannungsvervielfachung der Spannungstransformationsschaltung (4, 6) ist;

ein Ausgangsspannungs-Meßteil (32), welches in Abhängigkeit von dem elektrischen Elektrodenstrom (I2), der von der Hochspannungselektrode (8) über den zu beschichtenden Gegenstand (12) und Erdpotential (16) zu einem von dem Erdpotential (16) abweichenden elektrischen Bezugspotential (18) der elektronischen Steuerschaltung (30) zurückfließt, und in Abhängigkeit von dem elektrischen Innenwiderstand (Ri) der Spannungstransformationsschaltung (4, 6), welcher an der Hochspannungselektrode (8) meßbar ist, eine Spannungsabfall-Signalspannung ($34 = URi = I2 \times Ri$) erzeugt, welche dem Multiplikationsprodukt von dem während des Sprühbetriebes jeweils fließenden Elektrodenstrom (I2) mal dem Innenwiderstand (Ri) der Spannungstransformationsschaltung entspricht und damit dem Spannungsabfall entspricht, der in der Spannungstransformationschaltung (4, 6) zwischen der Meßstelle der Eingangsspannung (U1) und der Hochspannungselektrode (8) stromabhängig entsteht;

eine Istwert-Differenzschaltung (40), welche aus der Eingangs-Signalspannung (38) und der Spannungsabfall-Signalspannung (34) eine Differenz-Signalspannung ($42 = U2$) erzeugt, welches der Differenz von der Eingangsspannung-Signalspannung (38) minus der Spannungsabfall-Signalspannung (34) entspricht und damit stromabhängig auch dem jeweiligen Istwert der Hochspannung an der Elektrode (8) entspricht.

2. Elektrostatische Sprühbeschichtungseinrichtung nach Anspruch 1, **dadurch gekennzeichnet,** daß eine Sollwert-Differenzschaltung (46) und ein Regler (44) vorgesehen sind, daß die Sollwert-Differenzschaltung (46) eine Regeldifferenz-Signalspannung (50) bildet, welche der Differenz von einer Sollwert-Signalspannung (48) und der Differenz-Signalspannung (42) der Istwert-Differenzschaltung (40) entspricht, daß die Regeldifferenz-Signalspannung (50) dem Regler (44) als Stellgröße zugeführt wird, daß der Regler (44) in Abhängigkeit von der Regeldifferenz-Spannung (50) die vom Hochspannungserzeuger (2, 4, 6) erzeugte Hochspannung (U2) der Hochspannungselektrode (8) regelt.

3. Elektrostatische Sprühbeschichtungseinrichtung nach Anspruch 2, **dadurch gekennzeichnet,** daß eine Leistungsbegrenzungsschaltung (52) vorgesehen ist, welche die vom Hochspannungserzeuger (2, 4, 6) erzeugte Leistung oder Energie ab einer vorbestimmten Leistungs- oder Energiegrenze nicht weiter ansteigen läßt, daß die Leistungsbegrenzungsschaltung (52) bei Erreichen oder Überschreiten der genannten Grenze die Hochspannung (U2) der Hochspannungselektrode (8) in Abhängigkeit von dem Elektrodenstrom (I2) entsprechend der mathematischen Formel, wonach die Leistung oder Energie gleich dem mathematischen Produkt von Spannung mal Strom ist, entsprechend derart reduziert, daß die genannte Grenze nicht überschritten wird; daß eine Leistungs-Vergleichsschaltung (52) vorgesehen ist, welche die Regeldifferenz-Signalspannung (50) mit einer Leistungsvergleichsspannung (54) vergleicht und ein Signal (56) erzeugt, wenn die Regeldifferenz-Signalspannung (50) größer als die Leistungsvergleichsspannung (54) ist, so daß das Signal jeweils dann erzeugt wird, wenn der Hochspannungserzeuger im Bereich der Leistungs- oder Energiebegrenzung arbeitet und deshalb von der Leistungsbegrenzungsschaltung (52) daran gehindert wird, die Hochspannung (U2) der Hochspannungselektrode (8) zu erhöhen, obwohl die Regeldifferenz-Signalspannung (50) eine Erhöhung der Hochspannung (U2) fordert.

4. Elektrische Sprühbeschichtungseinrichtung nach einem der vorhergehenden Ansprüche, **dadurch gekennzeichnet,** daß der Hochspannungserzeuger (2, 4, 6) einen Oszillator (2) zur Erzeugung einer Wechselspannung aus einer Gleichspannung, einen Transformator (4), dessen Primärseite an die Wechselspannung des Oszillators (2) angeschlossen ist, und eine Spannungsvervielfacherschaltung (6) aufweist, welche an die Sekundärseite des Transformators (4) angeschlossen ist und eine Gleichspannung-Hochspannung (U2) für die mindestens eine Hochspannungselektrode (8) erzeugt, wobei der Transformator (4) und die Spannungsvervielfacherschaltung (6) zusammen, oder die Spannungsvervielfacherschaltung (6) allein, die genannte Spannungstransformationsschaltung (4, 6) bilden.

5. Elektrostatische Sprühbeschichtungseinrichtung nach Anspruch 4,
**dadurch gekennzeichnet,** daß der Oszillator (2) örtlich getrennt von der Sprühvorrichtung (10) angeordnet ist.

6. Elektrostatische Sprühbeschichtungseinrichtung nach Anspruch 4 oder 5,
**dadurch gekennzeichnet,** daß die Spannungsvervielfacherschaltung (6) in oder an der Sprühvorrichtung (10) angeordnet ist.

7. Elektrostatische Sprühbeschichtungseinrichtung nach einem der Ansprüche 4, 5 oder 6,
**dadurch gekennzeichnet,** daß der Transformator (4) in oder an der Sprühvorrichtung (10) angeordnet ist.

8. Elektrostatische Sprühbeschichtungseinrichtung nach Anspruch 1,
**dadurch gekennzeichnet,** daß die elektronische Steuerschaltung (30) örtlich getrennt von der Sprühvorrichtung (10) angeordnet ist.

9. Elektrostatische Sprühbeschichtungseinrichtung nach Anspruch 3,
**dadurch gekennzeichnet,** daß die Leistungsbegrenzungsschaltung (52) örtlich getrennt von der Sprühvorrichtung (10) angeordnet ist.

10. Elektrostatisches Sprühbeschichtungsverfahren mit Verfahrensschritten zur Messung der Hochspannung (U2) von mindestens einer Hochspannungselektrode (8) zur elektrostatischen Aufladung von Beschichtungsmaterial, insbesondere Beschichtungspulver, während des Sprühbetriebes, insbesondere Sprühen von Beschichtungsmaterial, und im Leerlauf, insbesondere Hochspannung eingeschaltet, jedoch kein Sprühbetrieb, mit folgenden Verfahrensschritten:

Messen einer Steuerspannung oder Eingangsspannung (U1) einer Spannungstransformationsschaltung (4, 6) einer elektronischen Steuerschaltung (30);
elektronisch Multiplizieren (36) des Meßwertes der Steuerspannung oder Eingangsspannung (U1) mit dem Spannungsvervielfachungsfaktor (Av) der Spannungstransformationsschaltung (4, 6) und dadurch Bilden einer Steuerspannungs-Signalspannung oder Eingangsspannungs-Signalspannung (38), welche dem theoretischen Wert der Hochspannung (U2) an der Hochspannungselektrode (8) entspricht,
Messen des Stromes (I2) der von der Hochspannungselektrode (8) über den zu beschichtenden Gegenstand (12) und Erdpotential (16) zu einem von dem Erdpotential abweichenden elektrischen Bezugspotential (18) der elektronischen Steuerschaltung zurückfließt oder des von ihm erzeugten Spannungsabfalls über einem Meßwiderstand (66);
elektronisch Multiplizieren (32) des Meßwertes (I2 oder 68) mit dem am Hochspannungsausgang der Spannungstransformationsschaltung (4, 6) meßbaren elektrischen Innenwiderstand (Ri) der Spannungstransformationsschaltung (4, 6) und dadurch Bilden einer Spannungsabfall-Signalspannung (34), welche dem Spannungsabfall in der Spannungstransformationsschaltung (4, 6) entspricht, wenn in ihr Strom fließt;
elektronisch Subtrahieren der Spannungsabfall-Signalspannung (34) von der Steuerspannung-Signalspannung oder Eingangsspannungs-Signalspannung (38) und dadurch Erzeugen einer Differenz-Signalspannung (42), welche dem jeweiligen Istwert der Hochspannung (U2) an der Hochspannungselektrode (8) entspricht.

11. Elektrostatisches Sprühbeschichtungsverfahren nach Anspruch 10,
**dadurch gekennzeichnet,** daß zur Regelung der von der Spannungstransformationsschaltung (4, 6) erzeugten Hochspannung für die mindestens eine Hochspannungselektrode (8) die Differenz-Signalspannung (42) von einer Sollwert-Signalspannung (48) subtrahiert wird und damit eine Regeldifferenz-Signalspannung (50) erzeugt wird, und daß die Regeldifferenz-Signalspannung (50) als Stellgröße dem Regler zur Regelung der Hochspannung der Hochspannugnselektrode (8) in Abhängigkeit von der Stellgröße zugeführt wird.

12. Elektrostatisches Sprühbeschichtungsverfahren nach Anspruch 11,
**dadurch gekennzeichnet,** daß die Regeldifferenz-Signalspannung (50) mit einer Leistungs-Vergleichsspannung (54) verglichen (52) und in Abhängigkeit vom Vergleichsergebnis ein Signal (56) erzeugt wird, welches anzeigt, wenn die Spannungstransformationsschaltung (4, 6) in einem leistungsbegrenzten oder energiebegrenzten Bereich arbeitet, in welchem eine Erhöhung des Elektrodenstromes (I2) eine entsprechende Reduzierung der Hochspannung (U2) der Hochspannungselektrode (8) in der Weise zur Folge hat, daß die Leistung, welche dem mathematischen Produkt von Strom mal Spannung entspricht, eine vorbestimmte Leistungsgrenze nicht übersteigt.

**Claims**

1.  Electrostatic spray coating device, in particular for coating powders, comprising

    at least one spray device (10) for spraying the coating material onto an object (12) which is to be coated and which is electrically connected to earth potential (16);

    at least one high-voltage electrode (8) carried by the spraying device (10) for electrostatically charging the coating material;

    a high-voltage generator (2, 4, 6) which comprises a voltage transforming circuit (4, 6) and which generates the high voltage for the high-voltage electrode (8);
    characterized

    in that an electrical control circuit (30) is provided which comprises at least the following three circuit parts (36, 32, 40):

    an input-voltage measuring part (36) which measures an input voltage (U1) or control voltage of the voltage transforming circuit (4, 6) and consequently generates an input signal voltage (38) which corresponds to the multiplication product of the measured control voltage or input voltage (U1) times a voltage multiplication factor (Av), the voltage multiplication factor (Av) being the voltage multiplication of the voltage transforming circuit (4, 6);

    an output-voltage measuring part (32) which, as a function of the electrical electrode current (I2) which flows back from the high-voltage electrode (8) via the object (12) to be coated and earth potential (16) to an electrical reference potential (18), differing from the earth potential (16), of the electronic control circuit (30) and generates, as a function of the electrical internal resistance (Ri) of the voltage transforming circuit (4, 6) which can be measured at the high-voltage electrode (8), a voltage drop signal voltage ($34 = URi = I2 \times Ri$) which corresponds to the multiplication product of the electrode current (I2) flowing during each of the spraying operations times the internal resistance (Ri) of the voltage transforming circuit and, consequently corresponds to the voltage drop which is produced in the voltage transforming circuit (4, 6) between the measurement point of the input voltage (U1) and the high-voltage electrode (8) as a function of the current;

    an actual value differential circuit (40) which generates, from the input signal voltage (38) and the voltage drop signal voltage (34), a differential signal voltage ($42 = U2$) which corresponds to the difference of the input voltage signal voltage (38) minus the voltage drop signal voltage (34) and, consequently, also corresponds to the respective actual value of the high voltage at the electrode (8) as a function of the current.

2.  Electrostatic spray coating device according to Claim 1, characterized in that a set point differential circuit (46) and a loop controller (44) are provided, in that the set point differential circuit (46) forms a differential control signal voltage (50) which corresponds to the difference of a set point signal voltage (48) and the differential signal voltage (42) of the actual value differential circuit (40), in that the differential control signal voltage (50) is fed to the loop controller (44) as controlled variable, and in that the loop controller (44) controls, as a function of the differential control voltage (50), the high voltage (U2) generated by the high-voltage generator (2, 4, 6), of the high-voltage electrode (8).

3.  Electrostatic spray coating device according to Claim 2, characterized in that a power-limiting circuit (52) is provided which, from a predetermined power limit or energy limit upwards, does not permit the power or energy generated by the high-voltage generator (2, 4, 6) to increase further, in that, on reaching or exceeding the said limit, the power-limiting circuit (52) reduces the high voltage (U2) of the high-voltage electrode (8) accordingly as a function of the electrode current (I2) in accordance with the mathematical formula, according to which the power or energy is equal to the mathematical product of voltage times current, in such a way that the said limit is not exceeded, and in that a power comparison circuit (52) is provided which compares the differential control signal voltage (50) with a power comparison voltage (54) and generates a signal (56) if the differential control signal voltage (50) is greater than the power comparison voltage (54), with the result that a signal is always generated if the high-voltage generator is operating in the vicinity of the power limitation or energy limitation and the power-limiting circuit (52) is therefore prevented from increasing the high voltage (U2) of the high-voltage electrode (8) although the differential control signal voltage (50) requires an increase in the high voltage (U2).

4. Electrical spray coating device according to one of the preceding claims, characterized in that the high-voltage generator (2, 4, 6) comprises an oscillator (2) for generating an alternating voltage from a direct voltage, a transformer (4) whose primary side is connected to the alternating voltage of the oscillator (2) and a voltage multiplier circuit (6) which is connected to the secondary side of the transformer (4) and generates a direct-voltage high voltage (U2) for the at least one high-voltage electrode (8), the transformer (4) and the voltage multiplier circuit (6) together, or the voltage multiplier circuit (6) alone, forming the said voltage transforming circuit (4, 6).

5. Electrostatic spray coating device according to Claim 4, characterized in that the oscillator (2) is disposed so as to be spatially isolated from the spraying device (10).

6. Electrostatic spray coating device according to Claim 4 or 5, characterized in that the voltage multiplier circuit (6) is disposed in or at the spraying device (10).

7. Electrostatic spray coating device according to one of Claims 4, 5, or 6, characterized in that the transformer (4) is disposed in or at the spraying device (10).

8. Electrostatic spray coating device according to Claim 1, characterized in that the electronic control circuit (30) is disposed so as to be spatially isolated from the spraying device (10).

9. Electrostatic spray coating device according to Claim 3, characterized in that the power-limiting circuit (52) is disposed so as to be spatially isolated from the spraying device (10).

10. Electrostatic spray coating method comprising method steps for measuring the high-voltage (U2) of at least one high-voltage electrode (8) for electrostatically charging coating material, in particular coating powder, during the spraying operation, in particular the spraying of coating material, and in no-load operation, switches on, in particular high voltage, but no spraying operation, comprising the following method steps:

measuring of a control voltage or input voltage (U1) of a voltage transforming circuit (4, 6) of an electronic control circuit (30);

electronic multiplication (36) of the measured value of the control voltage or input voltage (U1) by the voltage multiplication factor (Av) of the voltage transforming circuit (4, 6) and, consequently, formation of a control voltage signal voltage or input voltage signal voltage (38) which corresponds to the theoretical value of the high voltage (U2) at the high-voltage electrode (8);

measurement of the current (I2) which flows back from the high-voltage electrode (8) via the object (12) to be coated and earth potential (16) to an electrical reference potential (18), differing from the earth potential, of the electronic control circuit or of the voltage drop generated by it across a measuring resistor (66);

electronic multiplication (32) of the measured value (I2 or 68) by the electrical internal resistance (Ri), measurable at the high-voltage output of the voltage transforming circuit (4, 6), of the voltage transforming circuit (4, 6) and, consequently, formation of a voltage drop signal voltage (34) which corresponds to the voltage drop in the voltage transforming circuit (4, 6) if current is flowing in it;

electronic subtraction of the voltage drop signal voltage (34) from the control voltage signal voltage or input voltage signal voltage (38) and, consequently, generation of a differential signal voltage (42) which corresponds to the respective actual value of the high-voltage (U2) at the high-voltage electrode (8).

11. Electrostatic spray coating method according to Claim 10, characterized in that, to control the high voltage generated by the voltage transforming circuit (4, 6) for the at least one high-voltage electrode (8), the differential signal voltage (42) is subtracted from a set point signal voltage (48) and, consequently, a differential control signal voltage (50) is generated, and in that the differential control signal voltage (50) is fed as control variable to the loop controller to control the high voltage of the high-voltage electrode (8) as a function of the controlled variable.

12. Electrostatic spray coating method according to Claim 11, characterized in that the differential control signal voltage (50) is compared (52) with a power comparison voltage (54) and, as a function of the comparison result, a signal (56) is generated which indicates if the voltage transforming circuit (4, 6) is operating in a power-limited or energy-limited region in which an increase in the electrode current (I2) results in a corresponding reduction of the high voltage (U2) of the high-voltage electrode (8) in such a way that the power which corresponds to the mathematical product of current times voltage does not exceed a predetermined power limit.

## Revendications

1. Dispositif de revêtement par pulvérisation électrostatique, notamment pour de la poudre de revêtement, contenant

au moins un dispositif pulvérisateur (10) pour pulvériser le matériau de revêtement sur un objet à enduire (12) qui est relié électriquement au potentiel terrestre (16) ;
au moins une électrode à haute tension (8) montée sur le dispositif pulvérisateur (10) pour le chargement électrostatique du matériau de revêtement ;
un générateur de haute tension (2, 4, 6) qui comporte un circuit de transformation de tension (4, 6) et qui produit la haute tension pour l'électrode à haute tension (8) ;
caractérisé en ce que
il est prévu un circuit de commande électrique (30) qui comporte au moins les trois parties de circuit (36, 32, 40) suivantes :
une partie de mesure de tension d'entrée (36) qui mesure une tension d'entrée (U1) ou tension de commande du circuit de transformation de tension (4, 6) et qui produit avec une tension de signal d'entrée (38) qui correspond au résultat de multiplication de la tension de commande ou tension d'entrée mesurée (U1) par un facteur de multiplication de tension (Av), le facteur de multiplication de tension (Av) étant la multiplication de tension du circuit de transformation de tension (4, 6) ;
une partie de mesure de tension de sortie (32) qui produit, en fonction du courant électrique d'électrode (I2) qui reflue de l'électrode à haute tension (8) via l'objet à enduire (12) et le potentiel terrestre (16) à un potentiel de référence électrique (18), différent du potentiel terrestre (16), du circuit de commande électronique (30) et en fonction de la résistance interne électrique (Ri) du circuit de transformation de tension (4, 6) qui peut être mesurée à l'électrode à haute tension (8), une tension de signal de chute de tension ( $34 = URi = I2 \times Ri$ ) qui correspond au résultat de la multiplication du courant d'électrode (I2) passant à chaque fois pendant l'opération de pulvérisation par la résistance interne (Ri) du circuit de transformation de tension et qui correspond donc à la chute de tension qui se forme en fonction du courant dans le circuit de transformation de tension (4, 6) entre le point de mesure de la tension d'entrée (U1) et l'électrode à haute tension (8) ;
un circuit de différence de valeurs réelles (40) qui produit à partir de la tension de signal d'entrée (38) et de la tension de signal de chute de tension (34) une tension de signal de différence (42 = U2) qui correspond à la différence de la tension de signal de tension d'entrée (38) moins la tension de signal de chute de tension (34) et qui correspond donc aussi en fonction du courant à la valeur réelle respective de la haute tension à l'électrode (8).

2. Dispositif de revêtement par pulvérisation électrostatique selon la revendication 1,
caractérisé en ce qu'il est prévu un circuit de différence de valeur de consigne (46) et un régulateur (44), le circuit de différence de valeur de consigne (46) forme une tension de signal de différence de régulation (50) qui correspond à la différence d'une tension de signal de valeur de consigne (48) et de la tension de signal de différence (42) du circuit de différence de valeurs réelles (40), la tension de signal de différence de régulation (50) est envoyée au régulateur (44) comme grandeur réglante, le régulateur (44) régule en fonction de la tension de différence de régulation (50) la haute tension (U2) produite par le générateur de haute tension (2, 4, 6) pour l'électrode à haute tension (8).

3. Dispositif de revêtement par pulvérisation électrostatique selon la revendication 2,
caractérisé en ce qu'il est prévu un circuit de limitation de puissance (52) qui ne laisse pas augmenter la puissance ou l'énergie produite par le générateur de haute tension (2, 4, 6) au delà d'une certaine limite de puissance ou d'énergie prescrite, en ce que, lorsque ladite limite est atteinte ou dépassée, le circuit de limitation de puissance (52) réduit la haute tension (U2) de l'électrode à haute tension (8) en fonction du courant d'électrode (I2) selon la formule mathématique selon laquelle la puissance ou l'énergie est égale au produit mathématique de la tension par le courant, de telle sorte que ladite limite n'est pas dépassée, en ce qu'il est prévu un circuit de comparaison de puissance (52) qui compare la tension de signal de différence de régulation (50) à une tension de comparaison de puissance (54) et qui produit un signal (56) si la tension de signal de différence de régulation (50) est supérieure à la tension de comparaison de puissance (54) de telle sorte que le signal est produit à chaque fois que le générateur de haute tension fonctionne dans le domaine de la limitation de puissance ou d'énergie et est donc empêché par le circuit de limitation de puissance (52) d'augmenter la haute tension (U2) de l'électrode à haute tension (8) bien que la tension de signal de différence de régulation (50) demande une augmentation de la haute tension (U2).

4. Dispositif de revêtement par pulvérisation électrostatique selon l'une des revendications précédentes,

caractérisé en ce que le générateur de haute tension (2, 4, 6) comporte un oscillateur (2) pour la production d'une tension alternative à partir d'une tension continue, un transformateur (4) dont le côté primaire est raccordé à la tension alternative de l'oscillateur (2) et un circuit de multiplication de tension (6) qui est raccordé au côté secondaire du transformateur (4) et qui produit une haute tension continue (U2) pour la, au moins une, ou les électrodes à haute tension (8), le transformateur (4) et le circuit de multiplication de tension (6) formant conjointement ledit circuit de transformation de tension (4, 6) ou le circuit de multiplication de tension (6) formant seul ledit circuit de transformation de tension (4, 6).

5. Dispositif de revêtement par pulvérisation électrostatique selon la revendication 4, caractérisé en ce que l'oscillateur (2) est agencé localement séparé du dispositif pulvérisateur (10).

6. Dispositif de revêtement par pulvérisation électrostatique selon la revendication 4 ou 5, caractérisé en ce que le circuit de multiplication de tension (6) est agencé dans ou sur le dispositif pulvérisateur (10).

7. Dispositif de revêtement par pulvérisation électrostatique selon l'une des revendications 4, 5 ou 6, caractérisé en ce que le transformateur (4) est agencé dans ou sur le dispositif pulvérisateur (10).

8. Dispositif de revêtement par pulvérisation électrostatique selon la revendication 1, caractérisé en ce que le circuit de commande électronique (30) est agencé localement séparé du dispositif pulvérisateur (10).

9. Dispositif de revêtement par pulvérisation électrostatique selon la revendication 3, caractérisé en ce que le circuit de limitation de puissance (52) est agencé localement séparé du dispositif pulvérisateur (10).

10. Procédé de revêtement par pulvérisation électrostatique comportant des étapes pour la mesure de la haute tension (U2) d'au moins une électrode à haute tension (8) pour le chargement électrostatique de matériau de revêtement, notamment de poudre de revêtement, pendant l'opération de pulvérisation, notamment de pulvérisation de matériau de revêtement, et à vide, notamment avec la haute tension branchée mais sans opération de pulvérisation, comportant les étapes suivantes :

mesure d'une tension de commande ou tension d'entrée (U1) d'un circuit de transformation de tension (4, 6) d'un circuit de commande électronique (30) ;

multiplication électronique (36) de la valeur mesurée de la tension de commande ou tension d'entrée (U1) par le facteur de multiplication de tension (Av) du circuit de transformation de tension (4, 6) et donc formation d'une tension de signal de tension de commande ou de tension d'entrée (38) qui correspond à la valeur théorique de la haute tension (U2) à l'électrode à haute tension (8) ;

mesure du courant (I2) qui reflue de l'électrode à haute tension (8) via l'objet à enduire (12) et le potentiel terrestre (16) à un potentiel de référence électrique (18), différent du potentiel terrestre, du circuit de commande électronique ou mesure de la chute de tension, produite par ce courant, à une résistance de mesure (66) ;

multiplication électronique (32) de la valeur mesurée (I2 ou 68) par la résistance interne électrique (Ri), mesurable à la sortie de haute tension du circuit de transformation de tension (4, 6), du circuit de transformation de tension (4, 6) et donc formation d'une tension de signal de chute de tension (34) qui correspond à la chute de tension dans le circuit de transformation de tension (4, 6) lorsqu'un courant passe dans celui-ci ;

soustraction électronique de la tension de signal de chute de tension (34) de la tension de signal de tension de commande ou de tension d'entrée (38) et donc production d'une tension de signal de différence (42) qui correspond à la valeur réelle respective de la haute tension (U2) à l'électrode à haute tension (8).

11. Procédé de revêtement par pulvérisation électrostatique selon la revendication 10, caractérisé en ce que pour la régulation de la haute tension produite par le circuit de transformation de tension (4, 6) et destinée à la, au moins une, ou aux électrodes à haute tension (8), la tension de signal de différence (42 est soustraite d'une tension de signal de valeur de consigne (48) et une tension de signal de différence de régulation (50) est donc produite et la tension de signal de différence de régulation (50) est envoyée comme grandeur réglante au régulateur pour la régulation de la haute tension de l'électrode à haute tension (8) en fonction de la grandeur réglante.

12. Procédé de revêtement par pulvérisation électrostatique selon la revendication 11, caractérisé en ce que la tension de signal de différence de régulation (50) est comparée (52) à une tension de comparaison de puissance (54) et il est produit en fonction du résultat de comparaison un signal (56) qui indique si le circuit de transformation de tension (4, 6) fonctionne dans un domaine à limite de puissance ou d'énergie dans lequel une augmentation du courant d'électrode (I2) entraîne une réduction correspondante de la haute tension (U2) de l'électrode à haute tension (8) de telle sorte que la puissance qui correspond au produit mathématique du courant par la tension ne dépasse pas une limite de puissance prescrite.

# FIG. 1

# FIG. 2

# FIG. 3

# FIG. 4

# FIG.5